(19)

Europäisches
Patentamt
European
Patent Office
Office européen
des brevets

(11)  **EP 1 933 266 A1**

(12)  **EUROPEAN PATENT APPLICATION**

(43) Date of publication:
    **18.06.2008  Bulletin 2008/25**

(51) Int Cl.:
    ***G06Q 30/00*** *(2006.01)*

(21) Application number: **06291956.8**

(22) Date of filing: **15.12.2006**

(84) Designated Contracting States:
    **AT BE BG CH CY CZ DE DK EE ES FI FR GB GR
    HU IE IS IT LI LT LU LV MC NL PL PT RO SE SI
    SK TR**
    Designated Extension States:
    **AL BA HR MK RS**

(71) Applicant: **SAP AG**
    **69190 Walldorf (DE)**

(72) Inventors:
    • **Rahaman, Mohammad Ashiqur**
      **06000 Nice (FR)**
    • **Kadir, Faisal Abdul**
      **1217 Dhaka (BD)**

(74) Representative: **Lehmann, Judith Christina**
    **Hössle Kudlek & Partner**
    **Patentanwälte**
    **Postfach 10 23 38**
    **70019 Stuttgart (DE)**

(54)  **Method and system for preventing attacks on online auction sales**

(57)    A method for preventing attacks on auction sales of an online auction service provided by an auction server (A) within a network system, the method comprising:
an auction opening operation, a bid offering operation and an auction closing operation, whereby, in the auction closing operation, the auction server:
-receives a notification from a trusted time server (T) providing a trusted time service at the closing time for submissions of a bid,
-sends the trusted time server (T) a message containing a hashed value calculated from all bid offers of at least one buyer which are successfully received,
-receives back from the trusted time server (T) a timestamp to declare that the period for online auction is closed,
-sends the timestamped message to the at least one buyer which verifies that a bid offer, which the at least one buyer submitted, is included in the timestamped message by hashing its bid offer and comparing the result with the hashed value calculated from all successfully received bid offers.

Figure 1

## Description

### Copyright Notice

### Field of the Art

The following relates generally to methods and systems for preventing attacks on online auction sales. The following relates more specifically to methods and systems for preventing malicious clock modifications and providing non-repudiation for online auction sales.

### State of the Art

Online auction systems are used commonly these days. The pioneering online auction house eBay® turned into a very successful and profitable company. The popularity of these systems is ever increasing and day by day not only rare items like paintings, limited version of products, etc. are being sold through auctions, but also more common products. Mostly these common products are only available in limited amounts for the auction and during a certain time period. This allows companies to offer low, competitive prices, by saving money on keeping their stocks low and concentrating their IT support on specific time intervals. Auction mechanisms are becoming part of standard Enterprise Resource Planning (ERP) systems.

Research concerning protocols and a proposal of a specific protocol for online auctions have been published by Anderson (Frank Stajano, Ross Anderson, "The Cocaine Auction Protocol: On The Power Of Anonymous Broadcast" 3rd International Workshop on Information Hiding, held in Dresden, Germany, 1999). In their protocol the auction party describes the merchandise and proposes a starting price. The others then bid increasing amounts until there are no bids for 30 consecutive seconds. At that point the seller declares the auction closed and arranges a secret appointment with the winner to deliver the goods. He describes also the advantages over the eBay® model and mostly focuses on anonymity of the participants. Anderson does not however address the problem of attacks on the clock for time-based auctions.

In Naor (M. Naor, B. Pinkas, and R. Sumner "Privacy preserving auctions and mechanism design. In 1st ACM Conf. on Electronic Commerce", pages 129-139. ACM, 1999) the goal is to preserve the privacy of the inputs of the participants (so that no nonessential information about them is divulged, even a posteriori) while maintaining communication and computational efficiency. They achieve this goal by adding another party - the auction issuer (AI) - that generates the programs for computing the auctions but does not take an active part in the protocol. The auction issuer is not a trusted party, but is assumed not to collude with the auctioneer. They also provide a mechanism so that bidders can verify that the auction was performed correctly. The method for verifying that all bids were considered in the auction requires the AI to sign a list of hash values of each of the messages it received from the bidders. These hash values are displayed by the auctioneer. Bidders can check that the AI signed the hash of their messages however this method does not take into account the proof that the bid was made during a precise, previously defined time interval.

The document entitled "Multi-dimensional Hash Chain for Sealed-Bid Auction" by Prakobpol and Permpoontanalarp (K. Chae and M. Yung (eds.): WISA 2003, LNCS 2908, pp.257-271, 2004 Springer-Verlag Berlin Heidelberg 2004) discloses a protocol for carrying out a sealed-bid auction whereby a bidding price is represented by using a multi-dimensional hash chain which corresponds to an m-ary tree structure. The protocol is however only applicable to sealed bid auctions and it does not take into account the proof that the bid was made during a precise, previously defined time interval.

Prior art document US6823456 discloses a system and method for providing trusted services using a trusted server agent (TSA) that provides various trusted services to the client on behalf of a trusted server. For example, with regard to Internet auctions, the client may have to submit a particular bid before a certain deadline. If there is a network failure or the entity receiving the bids is not reachable by a local TSA for some reason, the client may require reliable delivery of bid with a trusted timestamp to ensure that such bid is delivered with a trusted timestamp or that such bid was submitted at the required time despite the fact that it was not actually delivered. In this case however the system is still susceptible to all kinds of malicious attacks (if the "trusted" timestamp servers would turn malicious) when there is a network failure and the bid is not received, but still valid (because of the timestamp).

In online auction sales, a buyer can easily verify a purchase statement by comparing the price on the receipt and the amount paid later from his/her bank account. However, the buyer does not know that the merchant's system clock is always exact. A verification of the exact time becomes important if the merchant engages in temporal transactions such as discount selling during a limited period. Situations where a verification of the clock time is needed can be: a) when the application server's system clock is not trusted, and may therefore be slow or fast. b) The user's system clock is not trusted, and may therefore be slow or fast. c) A malicious party may alter or forge temporal records stored in the user's machine or server.

**Summary**

Against the background of the cited prior art it would be desirable to provide methods and systems for preventing malicious clock modifications and non-repudiation for online auction sales. Non-repudiation means that it can be verified that the sender and the recipient were, in fact, the parties who claimed to send or receive the message, respectively. In other words, non-repudiation of origin proves that data has been sent, and non-repudiation of delivery proves it has been received. Non-repudiation involves the interchange of authentication information combined with some form of provable timestamp.

According to one aspect a method for preventing attacks on auction sales of an online auction service provided by an auction server (A) within a network system is provided. The method comprises an auction opening operation, a bid offering operation and an auction closing operation. In the auction closing operation, the auction server receives a notification from a trusted time server (T) providing a trusted time service at the closing time for submissions of a bid. The auction server then sends T a message containing a hashed value calculated from all bid offers of at least one buyer which are successfully received. The auction server receives back from T a timestamp to declare that the period for online auction is closed, and sends the timestamped message to the at least one buyer which verifies that a bid offer, which the at least one buyer submitted, is included in the timestamped message by hashing its bid offer and comparing the result with the hashed value calculated from all successfully received bid offers.

For that purpose, the buyer possesses a hash function identical to the auction service's hash function so that the buyer can hash its own bid offer and compare it to the list of hashed values received from the auction server providing the auction service, designated herein as the hashed value calculated from all successfully received bid offers. That means that for each bid offer one hash value is calculated and listed in a list with hashes of all different bid offers received within the time period defined by the opening time and the closing time, namely the permitted time period for bidding. When being notified at the closing time the auction service server sends this list to the time service server, getting there a timestamp on it and then sends it directly to the at least one buyer so that the buyer can verify the correctness immediately. The hash function can be freely and appropriately chosen.

In one implementation, in the auction opening operation, the auction server requests T to notify it at the opening time and closing time for submission of a bid, the auction server receives subsequently acknowledgement of the notification, the auction server receives subsequently notification from T at the opening time for submission of a bid and sends subsequently a message with a description of an auction offering to T.

In a further implementation, in the bid offering operation, the auction server receives a query from the at least one buyer with the identification of a desired object and sends subsequently T's timestamp to the buyer. The auction server then receives an electronic message from the buyer containing the timestamp, the buyer's data including at least one bid offer, origin and destination information, altogether provided with the buyer's signature. The auction server then sends, if it is before the auction closing time, a notification to the trusted time server to issue a timestamp on the at least one bid offer, and sends the timestamp to the buyer.

According to one implementation of the method, the hashed value calculated from all successfully received bid offers is calculated according to the following formula:

$$z = h(m1), \ h(m2), \ldots, h(mi), \ldots,$$

wherein h is a hash function, mi is a bid offer with i being an integer.

Another aspect refers to a system for preventing attacks on auction sales of an online auction service within a network system, the system comprising an online auction server (A) providing an online auction service which comprises hashing means which are configured to, upon notification by notifying means of a trusted time server (T) providing a trusted time service at the closing time for submissions of a bid, send subsequently T a message containing a hashed value calculated from all successfully received bid offers. The online auction server further comprises receiving means which are configured to receive back from T a timestamp to declare that the period for online auction is closed, and sending means which are configured to send the timestamped message to at least one buyer, whereby the at least one buyer comprises hashing means for verifying that a bid offer which the buyer submitted is included in the timestamped message by hashing its bid offer and comparing the result with the hashed value calculated from all successfully received bid offers.

It is possible to calculate the hashed value calculated from all successfully received bid offers according to the following formula:

$$z = h(m1), \ h(m2),\ldots,h(mi),\ldots,$$

wherein h is a hash function, mi is a bid offer with i being an integer.

In a further aspect a system for preventing attacks on auction sales of an online auction service is provided, the system comprising at least one buyer, a trusted time server (T) providing a trusted time service and an auction server (A) providing an online auction service. The system is configured to implement the method operations comprising an auction opening operation, a bid offering operation and an auction closing operation. In the auction closing operation, the auction server (A) receives a notification from the trusted time server (T) at the closing time for submissions of a bid, and sends T a message containing a hashed value calculated from all bid offers of the at least one buyer which are successfully received. The auction server receives back from T a timestamp to declare that the period for online auction is closed and sends the timestamped message to the at least one buyer which verifies that a bid offer, which the at least one buyer submitted, is included in the timestamped message by hashing its bid offer and comparing the result with the hashed value calculated from all successfully received bid offers.

A further aspect provides a computer program product for preventing attacks on online auction sales, the computer program product containing computer readable program code for causing, when executed, computers of at least one buyer, a trusted time server (T) providing a trusted time service and an auction server (A) providing an online auction service to perform the method operations comprising an auction opening operation, a bid offering operation and an auction closing operation. The auction closing operation comprises the time server notifying the auction server at the closing time for submissions of a bid and the auction server subsequently sending the time server a message containing a hashed value calculated from all successfully received bid offers, and receiving back from T a timestamp to declare that the period for online auction is closed, the timestamped message being then sent to the at least one buyer which verifies that a bid offer which the at least one buyer submitted is included in the timestamped message by hashing its bid offer and comparing the result with the hashed value calculated from all successfully received bid offers.

According to one implementation of the system, the hashed value calculated from all successfully received bid offers is calculated according to the following formula:

$$z = h(m1), \ h(m2),\ldots,h(mi),\ldots,$$

wherein h is a hash function, mi is a bid offer with i being an integer.

The methods and systems described herein may be applied to any type of auction used, for example English, Dutch, first-price sealed bid and second-price sealed bid (Vickrey) auctions. In an English auction, the auctioneer begins with the lowest acceptable price and bidders are free to raise their bids successively until there are no more offers to raise the bid. The winning bidder is the one with the highest bid. Such an English auction is described in more detail in "R.P. McAfee and J. McMillan, Auctions and bidding. Journal of Economic Persepctives, pp. 699-738, June 1987". The Dutch auction is the converse of the English one. The auctioneer calls for an initial high price, which is then lowered progressively until there is a bid offer from a bidder to claim the item. In the first-priced sealed bid, each bidder submits his bid offer for the item independently without any knowledge of the other bids. The highest bidder gets the item and he pays a price equal to his bid amount. Finally, a Vickrey auction is similar to a first-price sealed bid auction, but the item is awarded to the highest bidder at a price equal to the second highest bid as it is described in "W. Vickrey. Counterspeculation, auctions and competitive sealed tenders, Journal of Finance, 18:8-37, 1961". In each case, the respective auction service has the right to choose the winner(s) out of the auction bids, but cannot deny reception of a bid offer. This way the possibility is left open to contest decisions based on service agreements or legal requirements.

In another aspect, a computer program product with a computer-readable medium and a computer program stored on the computer-readable medium with a program code is provided, the program code being suitable for carrying out a method as described before when the computer program is run on a computer.

In still a further aspect, there is provided a computer program with a program code which is suitable for carrying out a method as described before when the computer program is run on a computer.

Furthermore, a computer-readable medium with a computer program stored thereon is disclosed, the computer program comprising a program code which is suitable for carrying out a method as described before when the computer program is run on a computer.

A computer program product for preventing attacks on online auction sales, the computer program product containing computer readable program code for causing, when executed, the computer of an online auction service server (A) to perform method operations comprising an auction opening operation, a bid offering operation and an auction closing operation, whereby, in the auction closing operation, the computer of the auction service server receives a notification from a trusted time service server (T) at the closing time for submissions of a bid, then sends T a message containing a hashed value calculated from all bid offers of at least one buyer which are successfully received, and receives back from T a timestamp to declare that the period for online auction is closed, and then sends the timestamped message to the at least one buyer which verifies that a bid offer, which the at least one buyer submitted, is included in the timestamped message by hashing its bid offer and comparing the result with the hashed value calculated from all successfully received bid offers.

Further features and implementations will become apparent from the description and the accompanying drawings.

It will be understood that the features mentioned above and those described hereinafter can be used not only in the combination specified but can also be combined in other constellations or used on their own, without departing from the scope and the spirit of the present disclosure.

Implementations are schematically illustrated in the drawings by way of example and are hereinafter explained in detail with reference to the drawings. It is understood that the description is in no way limiting on the scope of the present disclosure and is merely an illustration of various implementations.

The details of one or more implementations are set forth in the accompanying drawings and the description below. Other features will be apparent from the description and drawings, and from the claims.

**Brief description of the Drawings**

In the drawings,

Figure 1 illustrates a system architecture for preventing attacks on online auction sales.

Figure 2 illustrates a process diagram for a method for preventing attacks on online auction sales;

Figure 3 illustrates a flow diagram for an auction closing operation of a possible implementation of the method described herein.

**Detailed Description**

The existence is assumed of a trusted timestamp server that adds a correct timestamp to temporal transaction data, that cannot be altered or forged. In this way, the security of temporal transactions is protected from attacks or system defects. Transaction records that contain time-sensitive information are accompanied by temporal proofs generated by the timestamp server. Thus, application servers do not have to provide a correct time service even though they provide time sensitive services to users.

Generally, an auction is opened at an opening time and closed at a closing time, thus defining a time period during which buying offers are permitted.

If an applicant takes a timestamp from the timestamp server for his/her bid offer before the closing time for submission and sends it to an auction server providing an auction service, some people may suspect the applicant of sending the bid offer before the opening time. Others may suspect the applicant of sending the bid offer after the closing time, even though his/her buying offer was generated before the closing time.

Therefore the requirements for an auction protocol are:

(a) The auction service server must not receive any bid offer except during the permitted period.

(b) The buyers must submit application data during the permitted period.

(c) The auction service server cannot forge, alter, or remove any application once it has been received.

(d) The auction service server must receive bid offers that arrive during the permitted period.

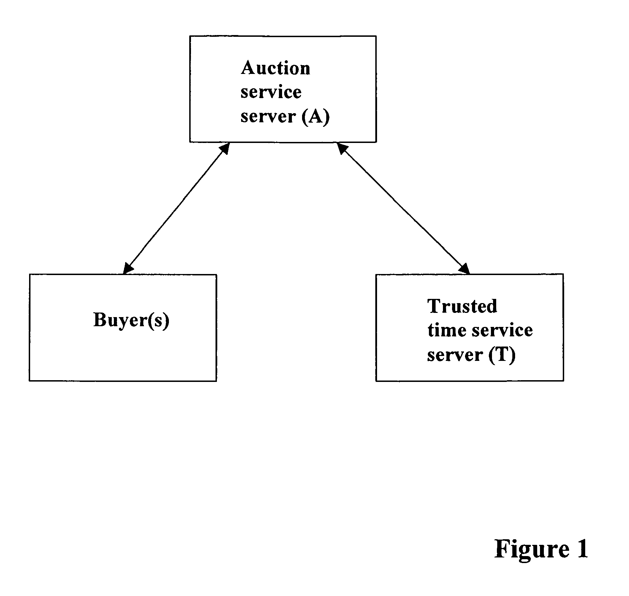

Referring first to figure 1 a system architecture for preventing attacks on online auction sales is shown. The system comprises an online auction service server (A), a trusted time service server (T) and at least one buyer. The auction service server can communicate with the buyer and the time service server through message sending and receiving means as indicated by respective arrows.

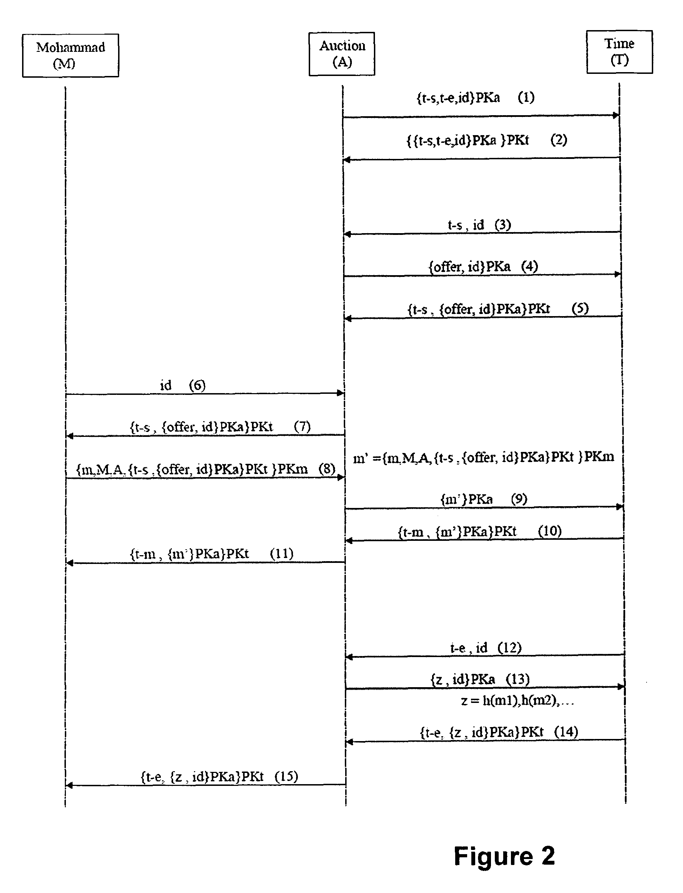

Referring to figure 2 a method for preventing attacks on online auction sales according to one implementation is shown.

The following notation is used: Principals are denoted by capital letters {M, A, ...}. M represents Mohammad, who is a buyer, A represents the Auction service server, which functions as receiver of the bid offer forms sent by multiple buyers, and T represents the Time service server, which is the trusted timestamp service provider as mentioned above. Messages are denoted by small letters {m, z} except for t which is used as a time parameter. The predefined time parameters are t-s, which denotes the opening time for auction, and t-e, which denotes the closing time. Km and PKm denote the public key and private key, respectively, for the principal M, and {n}PKm denotes the signature value for a message n calculated by M's private key.

In a public key encryption scheme, cryptographic keys occur in pairs: one of the pair is a private key that is kept confidential, and the other of the pair is a public key that can be made available to anyone. When data is encrypted using one of the keys, namely the private key that is kept confidential, the public key must be used to decrypt the data. For example, the auction service encrypts data using a private asymmetric cryptographic key belonging to the auction service. The auction service makes the corresponding public asymmetric cryptographic key available publicly. The only key that can properly decrypt the data is the public key corresponding to the private key with which the data was encrypted. When the buyer B receives the data, it uses auction service's public key to decrypt the data. If the data decrypts properly, the buyer B is certain that only the auction service, the sole holder of the corresponding private key, could have encrypted the data. In this way, the buyer B knows that the data must have originated from the auction service, i.e., that the data purportedly from the auction service is authentic. This is the basis of providing a digital signature, where the proof of origin and integrity of the sent data is important but not necessarily its confidentiality. The method of providing a digital signature is well known and will not be dealt with here in further detail.

Generally speaking, an auction procedure consists of three main operations, an auction opening operation, a bid offering operation and an auction closing operation.

In the auction opening operation, the auction service server A asks the time service server T to notify M at the opening time and closing time for submission of bid offers. In the opening operation, which is taken when notification is received from T, an opening timestamp is used to guarantee that the buyer M generates a bid offer after the opening time for auction.

In the bid offering operation, one or more applicants send bid offers to A and receive timestamps in acknowledgment of their bid offer. For simplification, the following is explained for the case of one buyer M.

In the auction closing operation, A acquires a closing timestamp and sends it back to M.

Each operation will now be described in more detail. The auction opening operation comprises sub-operations (1) to (5).

(1) A requests T to notify A at the opening time and closing time for submission, because A may not have the accurate time. It does this by sending the request encrypted with its private key PKa, which is denoted by {t-s,te,id}PKa

(2) The request is acknowledged in that T sends the request back to A encrypted using T's private key PKt, denoted by {{t-s,te,id}PKa}PKt.

(3) At the opening time for submissions of bids T notifies A, indicated by [t-s,id].

(4) A sends a message including a description (offer) of an auction bid submission to T, which means that A declares the opening of the period for online selling at that time. The message being encrypted with A's private key which can be denoted as {offer,id}PKa.

(5) T then returns a timestamp, that is, a signature on A's message with a correct current time value t-s, encrypting the message with T's private key: {t-s, {offer,id}PKa}PKt.

The bid offering operation comprises the following sub-operations (6) to (11):

(6) The buyer M makes a query to A with "id" which is the identification of the object M wants to buy.

(7) The buyer M retrieves T's timestamp from A, so that the buyer M can prove a bid submission is made after the auction opening time as indicated by {t-s,{offer,id}PKa}PKt.

(8) M sends a message to A, whereby the message consists of M's data m, the origin M, the destination A, the timestamp, and the buyer's signature PKm on them: {m,M,A,{t-s,{offer,id}PKa}PKt}PKm = m'

Since the timestamp, which is T's signature, can only be generated at the opening time for auction, M and A can prove that the buyer's submission was sent after time t-s.

(9) If it is before the closing time for auction, A sends T a message with A's signature PKa requesting T to issue a timestamp on each bid offer as indicated by {m'}PKa.

(10) T then issues A with a timestamp on each bid offer: {t-m,{m'}PKa}PKt.

(11) A then returns the timestamp to each buyer so that the buyer can verify that message (8) was received by A: {t-m, {m'}PKa}PKt.

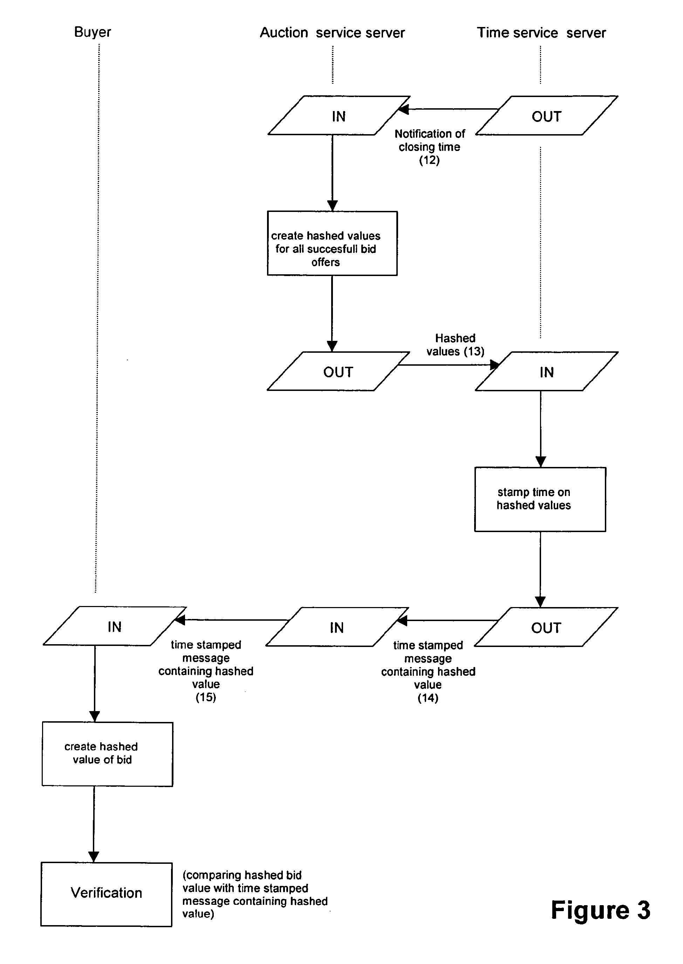

If A receives the application after the closing time, A returns message (15) instead of (9), (10) and (11). Message (15) contains information of all bids successfully received by A during the permitted time period.
Now referring to figures 2 and 3, which shows the auction closing operation comprising sub-operations (12) to (15):

(12) When the closing time for submission comes, A is notified by T by [t-e,id].

(13) A then hashes each of the succesfully received bid offers mi to create a hashed value z = h(m1), h(m2),...={h(mi)} defined as a sequence of hashes h(mi) with i being an integer. A then sends this hashed value z to T: {z, id}PKa.

(14) T then adds a timestamp to declare that the period for online auction is closed and sends the message back to A: {t-e,{z, id}PKa}PKt.

(15) The buyer M subsequently receives the message containing the hashed value z = h(m1), h(m2),... and can therefore verify that his/her bid offer is included in the bid offers succesfully received by A by reconstructing the hashed value, h(m), from his/her own data and comparing the reconstructed hashed value with the hashed values h(mi). If the hashed value h(m) matches with one of the hashed values h(mi) then the buyer can conclude that the bid was succesfully received. The message which is sent to buyer M is denoted as {t-e, {z, id}PKa}PKt.

The method as described implies that each buyer does not have to know about other buyers' data when verifying that the buyer's bid was inluded among the succesfully received bids. The timestamp guarantees the validity of all bid offers received by A, so forging operations on bid offers after the closing time can easily be detected. In the case of a subsequent dispute, each buyer and A can prove that they executed the auction correctly by showing message (15) and all successfully submitted data, mi.
In a further implementation a system for preventing attacks on auction sales of an online auction service within a network system is provided. The system comprises at least one buyer (M), a trusted time server (T) providing a trusted time service and an auction server (A) providing an online auction service. The system is configured to implement the method operations which comprise an auction opening operation, a bid offering operation and an auction closing operation. The auction opening operation comprises the aforementioned sub-operations (1) to (6). The bid offering operation comprises the aforementioned sub-operations (7) to (11) and the auction closing operation comprises the aforementioned sub-operations (12) to (15).
A further implementation provides a system for preventing attacks on auction sales of an online auction service, the system comprising at least one buyer, a trusted time server (T) providing a trusted time service and an auction server providing an online auction service (A).
The trusted time service server (T) comprises auction start and end notifying means, means for giving a timestamp on received information and means for providing a digital signature on timestamped messages by encrypting them with its private key PKt.
The online auction service server (A) comprises hashing means, means for sending and receiving electronic messages and means for providing a digital signature on sent messages by encrypting them with its private key PKa. Suitable hashing means will be apparent to someone skilled in the art.
The buyer M comprises hashing means using the same hash function as used by A. The buyer further comprises electronic message sending and receiving means, and means for providing a digital signature on sent messages by encrypting them with its private key PKm.
Referring to figure 3, an auction closing operation comprising sub-operations (12) to (15) of a further implementation is explained. The trusted time service server T notifies the online auction service server A at the closing time for submissions of a bid by using the notifying means. The online auction service server A uses the hashing means, for upon notification at the closing time subsequently sending T a message containing a hashed value calculated from all successfully received bid offers. The message containing the digital signature PKa of A. A then receives back from T a timestamp to declare that the period for online auction is closed. The timestamp including T's digital signature PKt. The online auction service server A then sends the timestamped message to the at least one buyer M. The at least one buyer M hashes its own bid offer and compares the result with the hashed value calculated from all the bid offers successfully received by A. The buyers can therefore verify that their bid offers were included in the bid offers successfully received by A. If there are any problems each buyer and A can prove that they executed the auction correctly by showing the message containing all the successfully submitted data, mi.

Further, a computer program product for preventing attacks on online auction sales is provided.

The computer program product contains computer readable program code for causing, when executed, the computer of an online auction service to perform method operations comprising an auction opening operation, a bid offering operation and an auction closing operation.

In the auction closing operation, the computer of the auction service receives a notification from a trusted time service server (T) at the closing time for submissions of a bid. The computer of the auction service then sends T a message containing a hashed value calculated from all bid offers of at least one buyer which are successfully received, and receives back from T a timestamp to declare that the period for online auction is closed. The computer of the auction service then sends the timestamped message to the at least one buyer which verifies that a bid offer, which the at least one buyer submitted, is included in the timestamped message by hashing its bid offer and comparing the result with the hashed value calculated from all successfully received bid offers.

The types of online auction that can be conducted can vary, but the most popular ones are English, Dutch, first-price sealed bid and second-price sealed bid (Vickrey). In an English auction, the auctioneer begins with the lowest acceptable price and bidders are free to raise their bids successively until there are no more offers to raise the bid. The winning bidder is the one with the highest bid. The Dutch auction is the converse of the English one; the auctioneer calls for an initial high price, which is then lowered progressively until there is an bid offer from a bidder to claim the item. In the first-priced sealed bid, each bidder submits his bid offer for the item independently without any knowledge of the other bids. The highest bidder gets the item and he pays a price equal to his bid amount. Finally, a Vickrey auction is similar to a first-price sealed bid auction, but the item is awarded to the highest bidder at a price equal to the second highest bid.

The protocol is independent of the type of auction used, the focus is to secure the process and to obtain non-repudiation. The auction service has the right to choose the winner(s) out of the auction bids, but should cannot deny reception of a bid offer. This way the possibility is left open to contest decisions based on service agreements or legal requirements.

The hash function used in the method or systems as described before can be chosen by a skilled person during implementation and it will be apparent to someone skilled in the art to choose a hash function suitable for implementation in a particular online auction system.

According to one aspect an acknowledgement is sent to all bidders, which contains their bid and hashes of all the other bids. This way malicious cooperation between "trusted" timestamp servers can be prevented.

By focusing on the interaction of the hash protocol with the timestamp algorithm, the methods and systems described herein achieve non-repudiation, proves that the bid was made during a precise, previously defined time interval and prevents malicious clock modifications.

It should be understood that there exist implementations of other variations and modifications as may be readily apparent to those of ordinary skill in the art, and that the methods and systems described herein are not limited by specific implementations described herein. It is therefore contemplated to cover any and all modifications, variations or equivalents that fall within the scope of the basic underlying principals disclosed and claimed herein.

## Claims

1. A method for preventing attacks on auction sales of an online auction service provided by an auction server (A) within a network system, the method comprising:

   an auction opening operation, a bid offering operation and an auction closing operation,
   whereby, in the auction closing operation, the auction server:

   - receives a notification from a trusted time server (T) providing a trusted time service at the closing time for submissions of a bid,
   - sends the trusted time server (T) a message containing a hashed value calculated from all bid offers of at least one buyer which are successfully received,
   - receives back from the trusted time server (T) a timestamp to declare that the period for online auction is closed,
- sends the timestamped message to the at least one buyer which verifies that a bid offer, which the at least one buyer submitted, is included in the timestamped message by hashing its bid offer and comparing the result with the hashed value calculated from all successfully received bid offers.

2. The method for preventing attacks on auction sales of an online auction service provided by an auction server (A) according to claim 1,
whereby, in the auction opening operation, the auction server:

- requests the trusted time server (T) to notify it at the opening time and closing time for submission of a bid,
- receives subsequently acknowledgement of the notification,
- receives subsequently notification from the trusted time server (T) at the opening time for submission of a bid,
- sends subsequently a message with a description of an auction offering to the trusted time server (T).

3. The method for preventing attacks on auction sales of an online auction service provided by an auction server (A) according to claim 1 or 2,
whereby, in the bid offering operation, the auction server:

- receives a query from the at least one buyer with the identification of a desired object,
- sends subsequently the trusted time server's timestamp to the buyer,
- receives an electronic message from the buyer containing the timestamp, the buyer's data including at least one bid offer, origin and destination information, altogether provided with the buyer's signature,
- sends, if it is before the auction closing time, a notification to the trusted time server (T) to issue a timestamp on the at least one bid offer, and
- sends the timestamp to the buyer.

4. The method according to any one of the preceding claims, wherein the hashed value calculated from all successfully received bid offers is calculated according to the following formula:

$$z = h(m1), \ h(m2),…,h(mi),…,$$

wherein h is a hash function, mi is a bid offer with i being an integer.

5. A system for preventing attacks on auction sales of an online auction service within a network system, the system comprising an online auction server (A) providing an online auction service which comprises:

hashing means which are configured to, upon notification by the notifying means of a trusted time server (T) providing a trusted time service at the closing time for submissions of a bid, send subsequently the trusted time server (T) a message containing a hashed value calculated from all successfully received bid offers, and receiving means which are configured to receive back from the trusted time server (T) a timestamp to declare that the period for online auction is closed, and
sending means which are configured to send the timestamped message to at least one buyer, whereby the at least one buyer comprises hashing means for verifying that a bid offer which the buyer submitted is included in the timestamped message by hashing its bid offer and comparing the result with the hashed value calculated from all successfully received bid offers.

6. The system according to claim 5, wherein the hashed value calculated from all successfully received bid offers is calculated according to the following formula:

$$z = h(m1), \ h(m2),…,h(mi),…,$$

wherein h is a hash function, mi is a bid offer with i being an integer.

7. A system for preventing attacks on auction sales of an online auction service, the system comprising:

at least one buyer,
a trusted time server (T) providing a trusted time service,
an auction server (A) providing an online auction service,

the system configured to implement the method operations comprising an auction opening operation, a bid offering operation and an auction closing operation,
whereby, in the auction closing operation, the auction server:

- receives a notification from the trusted time server (T) at the closing time for submissions of a bid,
- sends the trusted time server (T) a message containing a hashed value calculated from all bid offers of the at least one buyer which are successfully received,
- receives back from the trusted time server (T) a timestamp to declare that the period for online auction is closed,
- sends the timestamped message to the at least one buyer which verifies that a bid offer, which the at least one buyer submitted, is included in the timestamped message by hashing its bid offer and comparing the result with the hashed value calculated from all successfully received bid offers.

8. The system for preventing attacks on auction sales of an online auction service provided by an auction server according to claim 7,
whereby, in the auction opening operation, the auction server:

- requests the trusted time server (T) to notify it at the opening time and closing time for submission of a bid,
- receives subsequently acknowledgement of the notification,
- receives subsequently notification from the trusted time server (T) at the opening time for submission of a bid,
- sends subsequently a message with a description of an auction offering to the trusted time server (T).

9. The system for preventing attacks on auction sales of an online auction service provided by an auction server according to claim 7 or 8,
whereby, in the bid offering operation, the auction server:

- receives a query from the at least one buyer with the identification of the desired object,
- sends subsequently the trusted time server's timestamp to the buyer,
- receives an electronic message from the buyer containing the timestamp, the buyer's data including at least one bid offer, origin and destination information, altogether provided with the buyer's signature,
- sends, if it is before the auction closing time, a notification to the trusted time server (T) to issue a timestamp on the at least one bid offer, and
- sends the timestamp to the buyer.

10. The system according to any one of claims 7 to 9, wherein the hashed value calculated from all successfully received bid offers is calculated according to the following formula:

$$z = h(m1), h(m2), …, h(mi), …,$$

wherein h is a hash function, mi is a bid offer with i being an integer.

11. A computer program product for preventing attacks on online auction sales, the computer program product containing computer readable program code for causing, when executed, the computers of

at least one buyer,
a trusted time server (T) providing a trusted time service,
an auction server (A) providing an online auction service,

to perform the method operations comprising an auction opening operation, a bid offering operation and an auction closing operation, whereby the auction closing operation comprises:

the trusted time server (T) notifying the auction service server (A) at the closing time for submissions of a bid and the auction service server (A) subsequently sending the trusted time server (T) a message containing a hashed value calculated from all successfully received bid offers,
and receiving back from the trusted time server (T) a timestamp to declare that the period for online auction is closed, the timestamped message being then sent to the at least one buyer which verifies that a bid offer submitted by the buyer is included in the timestamped message by hashing its bid offer and comparing the result with the hashed value calculated from all successfully received bid offers.

12. The computer program product for preventing attacks on online auction sales according to claim 11, whereby the auction opening operation comprises:

the auction service server (A) requesting the trusted time server (T) to notify the auction service server (A) at the opening time and closing time for submission of a bid,
the auction service server (A) subsequently receiving acknowledgement of the notification,
the trusted time server (T) subsequently notifying the auction service server (A) at the opening time for submission of a bid,
and the auction service server (A) subsequently sending a message with a description of an auction offering to the trusted time server (T).

13. The computer program product for preventing attacks on online auction sales according to claim 11 or 12, whereby the bid offering operation comprises:

the buyer retrieving the trusted time server's timestamp from the auction service server (A) by making a query with the identification of the desired object, the buyer subsequently sending an electronic message to the auction service server (A) containing the timestamp, the buyer's data including at least one bid offer, origin and destination information, altogether provided with the buyer's signature,
and if it is before the auction closing time, the auction service server (A) subsequently notifying the trusted time server (T) to issue a timestamp on the at least one bid offer and the auction service server (A) returning the timestamp to the buyer.

14. A computer program product with a computer-readable medium and a computer program stored on the computer-readable medium with a program code which is suitable for carrying out a method according to any one of claims 1 to 4 when the computer program is run on a computer.

15. A computer program with a program code which is suitable for carrying out a method according to any one of claims 1 to 4 when the computer program is run on a computer.

16. A computer-readable medium with a computer program stored thereon, the computer program comprising a program code which is suitable for carrying out a method according to any one of claims 1 to 4 when the computer program is run on a computer.

17. A computer program product for preventing attacks on online auction sales, the computer program product containing computer readable program code for causing, when executed, the computer of an online auction service to perform method operations comprising an auction opening operation, a bid offering operation and an auction closing operation, whereby, in the auction closing operation, the computer of the auction service:

- receives a notification from a trusted time service server (T) at the closing time for submissions of a bid,
- sends the trusted time service server (T) a message containing a hashed value calculated from all bid offers of at least one buyer which are successfully received,
- receives back from the trusted time service server (T) a timestamp to declare that the period for online auction is closed,
- sends the timestamped message to the at least one buyer which verifies that a bid offer, which the at least one buyer submitted, is included in the timestamped message by hashing its bid offer and comparing the result with the hashed value calculated from all successfully received bid offers.

18. The computer program product for preventing attacks on online auction sales, according to claim 17, whereby, in the auction opening operation, the computer of the auction service:

- requests the trusted time service server (T) to notify it at the opening time and closing time for submission of a bid,
- receives subsequently acknowledgement of the notification,

- receives subsequently notification from the trusted time service server (T) at the opening time for submission of a bid,
- sends subsequently a message with a description of an auction offering to the trusted time service server (T).

19. The computer program product for preventing attacks on online auction sales, according to claim 17 or 18, whereby, in the bid offering operation, the computer of the auction service:

- receives a query from the at least one buyer with the identification of the desired object,
- sends subsequently the trusted time service server's timestamp to the buyer,
- receives an electronic message from the buyer containing the timestamp, the buyer's data including at least one bid offer, origin and destination information, altogether provided with the buyer's signature,
- sends, if it is before the auction closing time, a notification to the trusted time service server (T) to issue a timestamp on the at least one bid offer, and
- sends the timestamp to the buyer.

20. The computer program product for preventing attacks on online auction sales, according to any one of claims 17 to 19, wherein the hashed value calculated from all successfully received bid offers is calculated according to the following formula:

$$z = h(m1), h(m2),…,h(mi),…,$$

wherein h is a hash function, mi is a bid offer with i being an integer.

**Figure 1**

| Mohammad (M) | Auction (A) | Time (T) |
|---|---|---|

$\{t\text{-}s, t\text{-}e, id\}PKa$ (1)

$\{\{t\text{-}s, t\text{-}e, id\}PKa\}PKt$ (2)

$t\text{-}s, id$ (3)

$\{offer, id\}PKa$ (4)

$\{t\text{-}s, \{offer, id\}PKa\}PKt$ (5)

$id$ (6)

$\{t\text{-}s, \{offer, id\}PKa\}PKt$ (7)

$m' = \{m, M, A, \{t\text{-}s, \{offer, id\}PKa\}PKt\}PKm$

$\{m, M, A, \{t\text{-}s, \{offer, id\}PKa\}PKt\}PKm$ (8)

$\{m'\}PKa$ (9)

$\{t\text{-}m, \{m'\}PKa\}PKt$ (10)

$\{t\text{-}m, \{m'\}PKa\}PKt$ (11)

$t\text{-}e, id$ (12)

$\{z, id\}PKa$ (13)

$z = h(m1), h(m2), \ldots$

$\{t\text{-}e, \{z, id\}PKa\}PKt$ (14)

$\{t\text{-}e, \{z, id\}PKa\}PKt$ (15)

## Figure 2

Buyer | Auction service server | Time service server

IN | OUT

Notification of
closing time
(12)

create hashed values
for all succesfull bid
offers

Hashed
values (13)

OUT | IN

stamp time on
hashed values

IN | IN | OUT

time stamped
message
containing hashed
value
(15)

time stamped
message
containing hashed
value
(14)

create hashed
value of bid

Verification

(comparing hashed bid
value with time stamped
message containing hashed
value)

## Figure 3

**European Patent**
**Office**

**DECLARATION**

which under Rule 45 of the European Patent Convention EP 06 29 1956
shall be considered, for the purposes of subsequent
proceedings, as the European search report

Application Number

| The Search Division considers that the present application, does not comply with the provisions of the EPC to such an extent that it is not possible to carry out a meaningful search into the state of the art on the basis of all claims<br><br>Reason:<br><br>The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.<br>The problems which are addressed do not appear to require a technical, but rather an administrative/organisational, or business, solution. The implementation of this solution may include the use of generic technical features, however these do not interact to solve any overall technical problem but merely serve their well-known functions.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>----- | **CLASSIFICATION OF THE APPLICATION (IPC)**<br><br>INV.<br>G06Q30/00 |
| --- | --- |
| **Place of search** Munich | **Date** 9 May 2007 | **Examiner** Heselius, Per |

EPO FORM 1504 (P04C37)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6823456 B

**Non-patent literature cited in the description**

- The Cocaine Auction Protocol: On The Power Of Anonymous Broadcast. **FRANK STAJANO ; ROSS ANDERSON.** 3rd International Workshop on Information Hiding. Dresden, 1999
- Privacy preserving auctions and mechanism design. **M. NAOR ; B. PINKAS ; R. SUMNER.** 1st ACM Conf. on Electronic Commerce. ACM, 1999, 129-139
- WISA 2003, LNCS. Springer-Verlag, 2004, vol. 2908, 257-271
- **R.P. MCAFEE ; J. MCMILLAN.** Auctions and bidding. *Journal of Economic Persepctives,* June 1987, 699-738
- **W. VICKREY.** Counterspeculation, auctions and competitive sealed tenders. *Journal of Finance,* 1961, vol. 18, 8-37